# EUROPÄISCHE PATENTANMELDUNG

(11) **EP 1 110 798 A2**
(43) Veröffentlichungstag der Anmeldung: **27.06.2001**
(21) Anmeldenummer: 00127156.8
(22) Anmeldetag: 12.12.2000
(51) Int. Cl.: B60L 3/10

(54) **Verfahren zur Früherkennung von Haftwertgrenzüberschreitungen der Räder von Schienenfahrzeugen**

(30) Priorität: 21.12.1999 DE 19961805
(71) Anmelder: SIEMENS AKTIENGESELLSCHAFT, 80333 München (DE)
(72) Erfinder: Lang, Norbert, 90763 Fürth (DE); Lang, Wolfram, 91052 Erlangen (DE)

(57) **Zusammenfassung**

Bekannten Verfahren zum Schleuder- und Gleitschutz sowie zur maximalen Haftwertausnutzung der Antriebe von Schienenfahrzeugen ist gemeinsam, daß das Haftwertmaximum erst überfahren wird, ehe eine Reduzierung des Momentensollwertes am Antrieb bewirkt wird, was eine große Belastung für die Antriebssysteme darstellt.

Nach dem Verfahren wird der aktuelle Drehmoment-Istwert jedes Antriebsmotors bestimmt, diese Drehmoment-Istwerte werden miteinander verglichen und bei Überschreiten der Drehmoment-Istwertdifferenz zweier Antriebsmotoren des Gruppenantriebes über einen vorbestimmten Wert wird der Drehmoment-Sollwert für den Gruppenantrieb auf den aktuell erreichten Istwert des Gesamtdrehmoments des Gruppenantriebs begrenzt.

Das Verfahren ist für alle Schienenfahrzeuge mit elektrischem Gruppenantrieb einsetzbar.

## Beschreibung

Die Erfindung betrifft ein Verfahren zur Früherkennung von Haftwertgrenzüberschreitungen der Räder von Schienenfahrzeugen mit elektrischem Gruppenantrieb.

Die Kraftschlußausnutzung bei Schienenfahrzeugen ist durch die Bedingungen des mechanischen Rad-Schiene-Systems begrenzt, da die maximale Leistung eines Triebfahrzeuges in der Regel höher ist als sie sich in jeder Antriebsphase auf die Schiene übertragen läßt. Insbesondere sind die mögliche Anfahrbeschleunigung und die Bremsverzögerung begrenzt. Verantwortlich hierfür ist die Haftung zwischen Rad und Schiene, ausgedrückt als der Haftwert zwischen beiden, der abhängig ist von den aktuellen örtlichen Bedingungen, also Wetter, Temperatur und Verschmutzungsgrad der Schiene, und von der Radumfangsgeschwindigkeit.

Wird die Haftwertgrenze überschritten, das heißt wird das vom Antriebsmotor angebotene Drehmoment höher als bei der betreffenden Raddrehzahl vom Rad-Schiene-System aufgenommen werden kann, so kommt es zum Schleudern der Räder, das heißt diese Räder drehen durch und übertragen dann kaum noch eine Kraft. Beim Bremsen mit zu hoher Bremskraft kommt es umgekehrt zum Gleiten der Räder, die dann die Bremskraft nicht mehr auf die Schiene übertragen.

Zum Verhindern des Schleuderns und Gleitens ist eine Reihe von Verfahren bekannt, die entweder von einem Vergleich der Drehzahlen der Räder verschiedener Radachsen oder von der Änderungsgeschwindigkeit der Drehzahl der einzelnen Räder ausgehen. Im erstgenannten Fall wird ein Schleudern oder Gleiten der Räder einer Radachse daran erkannt, daß diese im Verhältnis zur Raddrehzahl anderer Radachsen schneller drehen. Im anderen Fall wird die Drehzahlbeschleunigung einer Radachse als solche gemessen, wobei ein deutlicher Beschleunigungsknick als Schleudern bzw. Gleiten bewertet wird. Verschiedene Vorschläge beruhen auch auf dem Vergleich der gemessenen Radgeschwindigkeit gegenüber einer Pseudolaufachse, deren Geschwindigkeit mit einer Modellrechnung in einem Rechner ermittelt wird.

Moderne Traktionsantriebe machen sich die Schleuderneigung der Räder auch zunutze, indem sie mit Regelungssystemen arbeiten, die eine möglichst hohe Kraftschlußausnutzung erlauben, das heißt, daß sie einen Arbeitspunkt anstreben, bei dem die Haftwert-Schlupf-Kurve (Kraftschlußkennlinie) ein Maximum hat und gerade noch kein Schleudern eintritt. Da sich eine Kraftschlußkennlinie im Betrieb des Triebfahrzeuges nicht bestimmen läßt, arbeiten derartige Regelungssysteme mit einer Suchlogik. Dabei wird regelmäßig ein Arbeitspunkt überfahren, bei dem das Maximum des Haftwertes überschritten wird und der Radschlupf hohe Werte annimmt. Hierbei besteht die Gefahr, daß bei aufeinanderfolgenden Suchphasen der Radschlupf so weit erhöht wird, daß ein Schleudern eintritt, was wiederum nur durch eine übergeordnete Schleuderschutz-regelung beherrscht werden kann.

Allen genannten Verfahren ist gemeinsam, daß das Haftwertmaximum erst überfahren wird, ehe eine Reduzierung des Momentensollwertes am Antrieb bewirkt wird. Ein Überfahren des Haftwertmaximums stellt aber auf jeden Fall einen einmaligen oder - mit der vorbeschriebenen Regelung - einen ständigen Lastwechsel dar, der für die mechanischen Antriebselemente eine hohe Belastung bedeutet und der bei einem Fahrgasttransport unter Umständen auch für die Fahrgäste mit unangenehmen Beschleunigungswechseln verbunden ist.

Ein Fahren unterhalb des Haftwertmaximums ist nur nach der Erfahrung des Zugführers durch Vorgabe eines entsprechend niedrigen Zugkraftsollwertes möglich.

Der Erfindung liegt die Aufgabe zugrunde, ein Verfahren anzugeben, mit dem ein elektrisches Triebfahrzeug der eingangs genannten Art mit hoher Zugkraft-Sollwertvorgabe gefahren werden kann und eine mögliche Haftwertgrenz-überschreitung bereits frühzeitig erkannt wird.

Erfindungsgemäß wird die Aufgabe gelöst durch die Merkmale des Anspruchs 1. Zweckmäßige Ausgestaltungen sind Gegenstand der Unteransprüche.

Danach werden diese Drehmoment-Istwerte miteinander verglichen und bei Überschreiten der Drehmoment-Istwertdifferenz zweier Antriebsmotoren des Gruppenantriebes über einen vorbestimmten Wert der Drehmoment-Sollwert für den Gruppenantrieb auf den aktuell erreichten Istwert des Gesamtdrehmoments des Gruppenantriebs begrenzt.

Dem Verfahren liegt die Erkenntnis zugrunde, daß bei Gruppenantrieben, also Fahrwerksantrieben mit mehreren parallelgeschalteten Fahrmotoren, die gemeinsam geregelt werden, eine Überschreitung der Haftwertgrenze der jeweils von einem Fahrmotor angetriebenen Räder bzw. Achsen so gut wie nie gleichzeitig auftritt. Vielmehr geht einer Überschreitung der Haftwertgrenze des Rad-Schiene-Systems grundsätzlich eine unsymmetrische Verteilung der einzelnen übertragenen Zug/Bremskräfte voraus.

Mit dem Verfahren kann das Erreichen des Haftwertmaximums frühzeitig erkannt werden und rechtzeitig eine Drehmoment-Sollwertbegrenzung vorgegeben werden,, so daß die mechanische Belastung der Radantriebe in Grenzen gehalten wird. Zug/Bremskräfte, deren volle Ausnutzung nur in wenigen Betriebsfällen gefordert ist, werden nicht überschritten; der Antrieb erfolgt immer unterhalb des Kraftschluß/Schlupfmaximums. Insbesondere bei Triebfahrzeugen, die über eine separate Schleuder/Gleitschutzeinrichtung verfügen, kann die Sollwertbegrenzung nach diesem Verfahren für besondere Betriebszustände, z. B. bei einer Schnell- oder Notbremsung, gegebenenfalls ausschaltbar sein.

Das Verfahren ist mit allen bekannten Motorregelungsverfahren und entsprechenden Antrieben, also sowohl klassische Gleichstromantriebe als auch pulswechselrichtergesteuerte Asynchronantriebe, kombinierbar.

Zweckmäßig wird die Drehzahl der Antriebsmotoren inkremental gemessen, wie das bei modernen Antrieben ohnehin geschieht, um für die üblichen schnellen Regler ein genaues und hochdynamisches Drehzahlsignal bzw. einen Momentenwert zur Verfügung zu haben.

Das Verfahren ist gleichermaßen im Antriebs- als auch im Bremsbetrieb anwendbar. Voraussetzung im Bremsbetrieb ist, daß die Bremsung elektrisch erfolgt, das heißt, daß die Antriebsmotoren beim Bremsen im generatorischen Betrieb arbeiten. Die Bremsenergie kann in Bremswiderständen verbraucht oder, z. B. über einen Vierquadrantensteller, in das Bahnnetz zurückgespeist werden.

Das Verfahren wird nachstehend anhand eines Ausführungsbeispiels näher erläutert. In den zugehörigen Zeichnungen zeigen
Fig. 1 die Kraftschlußkennlinie der Räder von drei Radachsen bei einem Gesamtdrehmoment unterhalb des Haftwertmaximums,
Fig. 2 die gleichen Kennlinien bei einem Gesamtdrehmoment im Haftwertmaximum und
Fig. 3 ein Prinzipschaltbild einer Gruppenantriebsregelung mit dem Verfahren.

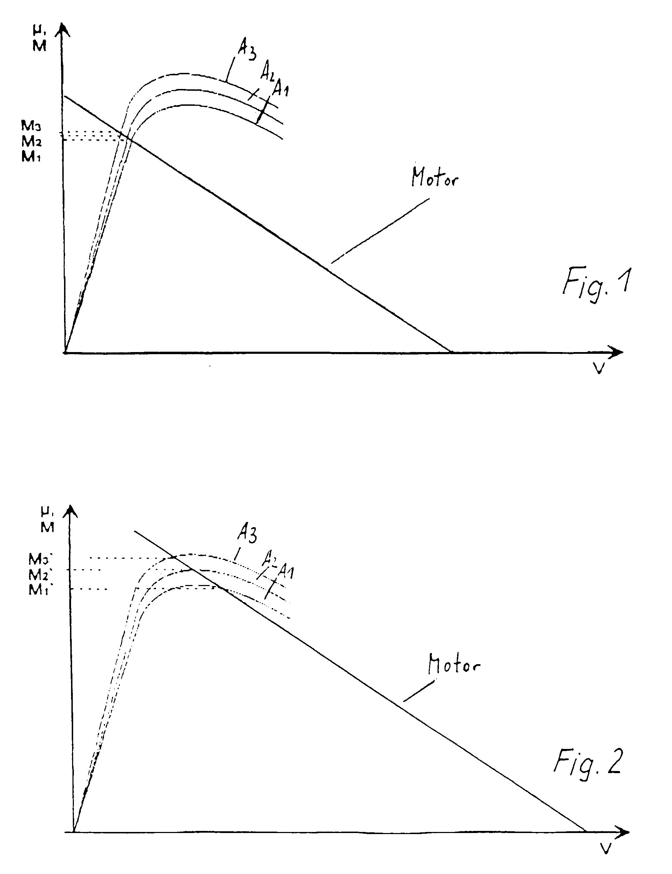

In Fig. 1 ist der Kraftschlußbeiwert µ über der Differenzgeschwindigkeit V von Rad und Schiene für drei Radachsen A₁, A₂, A₃ eines Gruppenantriebs aufgetragen.

Der Verlauf der Kraftschlußkennlinie hängt vom Zustand der Schiene (Oberflächenbeschaffenheit, Feuchtigkeit, Öl, Schmutzablagerungen), den beteiligten Materialien, der Temperatur und weiteren Einflüssen ab. Da diese Einflüsse aber für alle Radachsen A₁, A₂, A₃ gleichermaßen zutreffen, kann davon ausgegangen werden, daß sich die Kraftschlußkenn-linien ggf. gemeinsam verschieben. In jedem Fall weisen die Kraftschlußkennlinien ein meist ausgeprägtes Maximum auf, bei dessen Überschreiten es zu Schleudern oder Gleiten kommen kann.

Auffallend ist, daß die Kraftschlußkennlinien der Antriebsachsen eines Triebfahrzeuges nicht deckungsgleich sind, sondern im Maximum und/oder Anstiegswinkel oder in beiden voneinander abweichen. Die Kraftschlußkennlinien können mit der Antriebskennlinie der Antriebsmotoren zur Deckung gebracht werden, woraus sich die Arbeitspunkte ergeben, das heißt die Drehmomente M₁, M₂, M₃, bei denen die einzelnen Motoren eines gemeinsam geregelten Gruppenantriebes bei den aktuellen Bedingungen arbeiten. Diese Drehmomente M₁, M₂, M₃ sind im Anstiegsbereich der Kraftschlußkennlinien, also unterhalb des Kraftschlußmaximums, voneinander kaum verschieden.

Erhöht man das Gesamtdrehmoment, das sich aus den einzelnen Drehmomenten M₁, M₂, M₃ der drei Antriebsmotoren zusammensetzt, die ja bei einem Gruppenantrieb nur über eine gemeinsame Stellgröße verstellt werden können, so stellt sich eine Drehmomentenverteilung ein, wie sie in Fig. 2 gezeigt ist. Es zeigt sich, daß die Verteilung der Drehmomente der Antriebsmotoren davon abhängt, wie nahe sich der Antrieb am Maximum des Haftwertes befindet.

Die Differenz der aktuellen Drehmomentwerte läßt sich als Kriterium für das Erreichen des unter Betriebsbedingungen nicht meßbaren Kraftschlußmaximums werten.

Die Drehmomente der einzelnen Antriebsmotoren lassen sich durch Messung der Motordrehzahl, der Motor-Klemmenspannung und des Motorstromes leicht ermitteln und vergleichen. Weichen die Drehmomente in einer vorbestimmten Höhe voneinander ab, so wird der Drehmomentsollwert auf den aktuell erreichten Istwert begrenzt. Verringert sich anschließend die Differenz wieder aufgrund anderer Bedingungen an der Schiene, so wird die Sollwertbegrenzung wieder aufgehoben.

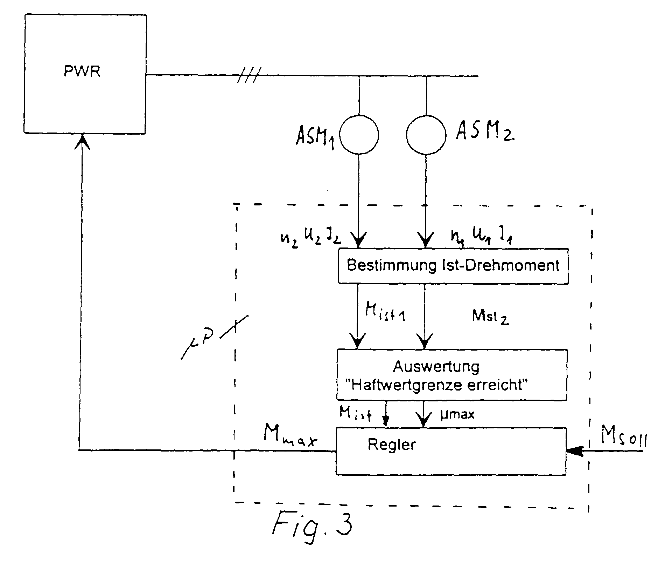

Fig. 3 zeigt ein Prinzipschaltbild eines Gruppenantriebs mit Momentenregelung. Zwei Asynchronmotoren ASM1, ASM2 für jeweils eine Radachse werden von einem Pulswechselrichter PWR versorgt, der von einem Regler auf der Basis eines Mikroprozessors µP angesteuert wird. An den Asynchronmotoren ASM1, ASM2 werden inkremental die Drehzahlen sowie die Spannung und der jeweilige Motorstrom gemessen und im Mikroprozessor µP daraus die Ist-Drehmomente Mᵢₛₜ₁, Mᵢₛₜ₂ errechnet. Die Differenz der Ist-Drehmomente Mᵢₛₜ₁, Mᵢₛₜ₂ wird bestimmt. Bei Überschreiten eines Schwellwertes, angedeutet als Erreichen des Haftwertmaximums µmax, wird der aktuelle Gesamtdrehmoment-Istwert Mᵢₛₜ zur Begrenzung des vom Zugführer vorgegebenen Drehmoment-Sollwerts Mₛₒₗₗ auf den aktuellen Maximal-Sollwert Mₘₐₓ verwendet.

Da unterschiedliche Raddurchmesser die Berechnung der Drehmomente der betreffenden Achsen verfälschen können, ist es wichtig, dieses in der Rechnung zu berücksichtigen. Die Verhältnisse der Raddurchmesser zueinander lassen sich jedoch durch Vergleich der Raddrehzahlen bei antriebsloser Fahrt bestimmen und so in die Rechnung einbinden.

Möglich ist eine Kalibrierung der Regelung eines Triebfahrzeuges auf einer Versuchsfahrt, da jedes Triebfahrzeug eine individuelle Kurvenschar von Kraftschlußkennlinien aufweisen wird. Unterschiedliche Achslasten, die von vornherein unterschiedliche Drehmomente an den Achsen bewirken, können so berücksichtigt werden, wobei bleibende Unterschiede der Kraftschlußkennlinien durchaus im Sinne des Verfahrens gewollt sind, damit sich meßbare Differenzen bei Erreichen des Haftwertmaximums ergeben.

## Patentansprüche

1. Verfahren zur Früherkennung von Haftwertgrenz-überschreitungen der Räder von Schienenfahrzeugen mit elektrischem Gruppenantrieb,
**dadurch gekennzeichnet,**
daß der aktuelle Drehmoment-Istwert jedes Antriebsmotors bestimmt wird, diese Drehmoment-Istwerte miteinander verglichen werden und bei Überschreiten der Drehmoment-Istwertdifferenz zweier Antriebsmotoren des Gruppenantriebes über einen vorbestimmten Wert der Drehmoment-Sollwert für den Gruppenantrieb auf den aktuell erreichten Istwert des Gesamtdrehmoments des Gruppenantriebs begrenzt wird.

2. Verfahren nach Anspruch 1,
**dadurch gekennzeichnet,**
daß zur Bestimmung eines Drehmoment-Istwerts die Drehzahl sowie Strom und Spannung eines Antriebsmotors gemessen werden.

3. Verfahren nach Anspruch 1 oder 2,
**dadurch gekennzeichnet,**
daß die Drehzahl eines Antriebsmotors inkremental gemessen wird.

4. Verfahren nach einem der vorhergehenden Ansprüche,
**dadurch gekennzeichnet,**
daß der Einfluß unterschiedlicher Raddurchmesser, die durch Messung der Raddrehzahlen im antriebslosen Zustand der Antriebsmotoren ermittelt werden, bei der Momentenberechnung berücksichtigt wird.
